# EUROPEAN PATENT SPECIFICATION

(11) **EP 2 611 085 B1**
(45) Date of publication and mention of the grant of the patent: **08.08.2018**
(21) Application number: 11196167.8
(22) Date of filing: 30.12.2011
(51) Int. Cl.: H04L 12/70

(54) **System and method for providing mobile communication**
System und Verfahren zur Bereitstellung von mobiler Kommunikation
Système et procédé pour la fourniture de communications mobiles

(43) Date of publication of application: 03.07.2013
(73) Proprietor: Deutsche Telekom AG, 53113 Bonn (DE)
(72) Inventor: Hui, Pan, 10709 Berlin (DE); Aucinas, Andrius, CB3 0AH Cambridge (GB)
(74) Representative: Vossius & Partner Patentanwälte Rechtsanwälte mbB

(56) References cited:
- EP-A1- 2 194 686
- GB-A- 2 454 872
- US-A1- 2005 068 967
- US-A1- 2011 075 557
- US-A1- 2011 316 663
- ALEXEY RUDENKO ET AL: "The Remote processing framework for portable computer power saving", APPLIED COMPUTING 2002: PROCEEDINGS OF THE 2002 ACM SYMPOSIUM ON APPLIED COMPUTING ; UNIVERSIDAD CARLOS III DE MADRID, MADRID, SPAIN, MARCH 11 - 14, 2002, ACM. ASSOCIATION FOR COMPUTING MACHINERY, US, 1 February 1999 (1999-02-01), pages 365-372, XP007902247, ISBN: 978-1-58113-445-2
- KOSTA S ET AL: "Unleashing the Power of Mobile Cloud Computing using ThinkAir", INTERNET CITATION, 16 May 2011 (2011-05-16), pages 1-17, XP002669912, Retrieved from the Internet: URL:http://en.wikipedia.org/w/index.php?ti tle=Cloud_computing&oldid=45308410 [retrieved on 2012-02-15]
- BYUNG-GON CHUN ET AL: "CloneCloud: Elastic execution between mobile device and cloud", (EUROSYS'11), ACM, SALZBURG, AUSTRIA, 10 April 2011 (2011-04-10), pages 301-314, XP002669910, DOI: DOI:10.1145/1966445.1966473 ISBN: 978-1-4503-0634-8

## Description

### Technical Field

The present invention relates to a system and a method for providing mobile communication. It introduces a set of new mobile computing approaches and presents a system built for next generation cellular networks, e.g. 4G LTE, to improve performance of mobile devices using the network as well as reduce the load of the network. It positions logic in the network close to end-users and enables applications such as mobile code offloading, low-latency data caching and network load smoothing. The present invention improves computational efficiency, data latency, battery consumption of mobile clients, and decreases core network load by deploying computational resources at the edge of a cellular network.

### Background of the invention

There are a number of publications relating to the present invention. In order to simplify citation in the description, each of these related publications is provided with a respective reference number. A mapping of the association is provided at the end of the description of the present invention.

Global mobile data traffic is growing at a very high pace, nearly tripling every year, for the third year in a row already [3] and it was 237 petabytes per month in 2010. This rapidly increasing usage is putting a large strain on the infrastructure of mobile networks and drives profit margins of the classic telecom revenue streams down, when combined with market forcing to reduce service prices. While some carriers are starting to abandon flat-rate data pricing, there is a need for a different and more versatile solution for the new LTE networks.

In the current network architecture the radio access network (RAN) already performs many functions, e.g. radio resource management, admission control, scheduling, ciphering, etc.

However, the base stations are still simple in the sense that they rely on the backhaul network for all communications, which puts an increasingly large strain on the backhaul network with the radio access network improving [2]. Adding intelligence to heavily loaded parts of the network can significantly improve performance and there have been various proposals of deploying proxy servers in 3G and GPRS networks for that reason [6, 16]. In general, by placing proxies further inside a cellular network, one can get much better access to information about current radio link conditions and could take action based on this.

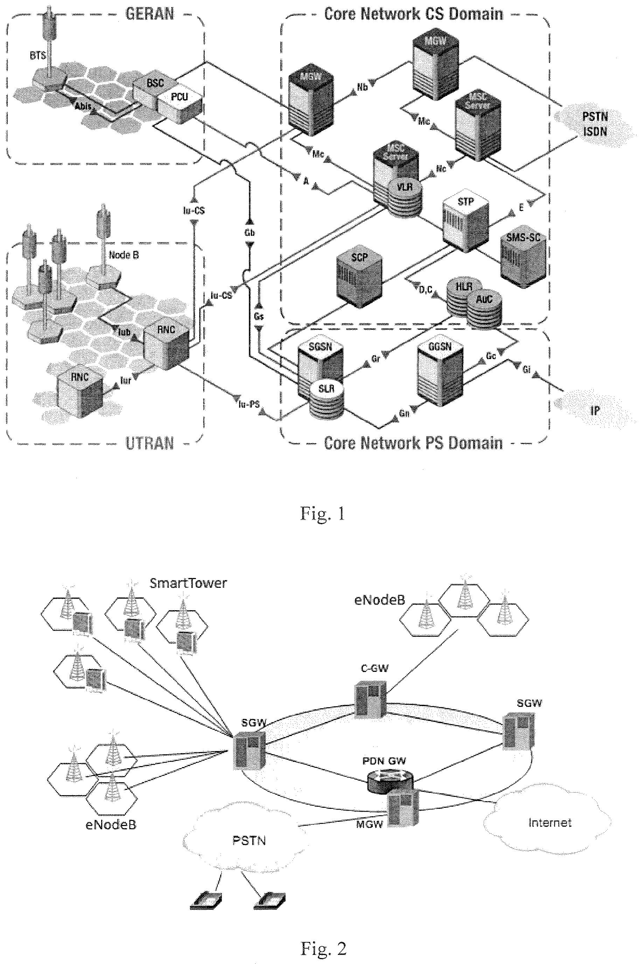

3G networks are circuit-switched, have a highly complex structure and IP layer only exists outside the backhaul network. see Fig. 1, making such approaches with proxy servers very difficult to implement. One of the key features of 4G LTE networks, however, flattened architecture and utilization of an all-packet (Ethernet/IP) architecture, also allows for some flexibility in the network. GB 2 454 872 A discloses a base station for a cellular communication system. The base station comprises a backhaul loading processor for determining a backhaul loading indication for the base station. The backhaul loading indication may be any measure of backhaul congestion, e.g. buffer levels for buffer exceeding thresholds, an amount of data waiting to be communicated over backhaul, an estimated transmit delay, or an estimation of air interface resource allocated for data to be transmitted over backhaul. A serving cell control processor performs serving cell management in response to the backhaul loading indication, including refusing new calls and handover of traffic to neighbours. Cell selection processor selects a neighbour base station for handover using information about air interface resource availability and backhaul loading of neighbours, received via communication processor. Buffer thresholds may be determined by Quality of Service delay requirements. The invention may reduce peak backhaul resource usage thereby reducing the required backhaul capacity for base station.

### Summary of the invention

The present invention is aimed at the aforementioned shortcomings and proposes a SmartTower architecture - making cellular network base stations smarter by adding commodity servers to a subset of 4G base stations and the backhaul network, which would allow not only intelligent proxy servers, but also provide support for applications that require computationally-intensive operations (e.g. Augmented Reality) and provide ways to reduce the network load using approaches outlined in the next section and with a relatively small increase in total capital expenditure of deploying a new network. The present invention is defined in the appended independent claims to which reference should be made. Advantageous features are set out in the appended dependent claims. The system or the method according to the present invention reduces load of the backhaul network through handling appropriate traffic closer to end-user, i.e. the base stations and gateways. It may further reduce the peak load of the network by scheduling traffic of delay-tolerant applications for later delivery, buffering it at base stations. The computing gateway may perform data tunnelling, act as a mobility anchor and analyse the tunnelled traffic to serve mobile users' requests locally. Moreover, the system or the method according to the present invention shares computational resources among computing gateways and further extends to the private cloud to provide horizontal scaling capabilities to the SmartTower network. In addition, the system or the method of the present invention may be used as a content caching and delivery network for further optimizations, using information about radio link conditions and user behaviour.

Even though the present invention explains the embodiments on basis of 4G networks, the only crucial property is an all-packet based network core, which is expected to be retained in future generations of cellular networks.

Since usefulness of inventions is in many cases restricted by their implementation costs, the present invention is further designed to minimize overall costs while maintaining the system's usefulness and performance. The costs of network deployment are already quite high - with the cost of a 3G micro cellular network base station (micro BS) equipment being around 20k€ for equipment and a further 15k€ for site installation costs and more than double that for a macro BS, excluding site build out costs. Not surprisingly, cumulated running costs dominate the total cost structure, however the majority of those are non-technical costs, such as marketing, terminal subsidies and wages [12]. Costs of 4G LTE network deployment are also similar: BTS equipment amounts to around 15% of capital expenditure and is around 20k-25k€ [4]. Our invention focuses on requiring only a marginal increase in total expenditure of building a next-generation cellular network.

Recently there has been a lot of interest in improving mobile device performance and reducing their power consumption by using code offloading [7, 8]. However, it has also been pointed out that WAN delays in the critical path of user interaction can hurt usability, therefore nearby resources (cloudlets) should rather be used to reduce latency [14]. While the proposed architecture of deploying servers in public locations to deal with smartphones' workloads would ensure low communication latencies, scaling such a network to useful size would be prohibitively expensive. Deploying servers at cell towers, however, would allow to massively reduce costs of such network because of the significantly higher communication ranges. What is more, since users are always connected to the cellular network, it would allow for much smoother interaction and better usage of the deployed resources.

Computation offloading is important not only to improve user experience of using their smartphone devices, but also to reduce the energy consumption, which has been very problematic for smartphones. In fact, MAUI [8] also focuses on this issue. By making code offloading feasible to more applications by reducing the latency the approach becomes much more attractive - the reduced latency allows for more opportunities without compromising performance and saves energy by minimizing the time a smartphone is in active state with screen on.

4G network requirements include significantly higher data rates and a much higher number of active users per cell, which further increases the pressure on backhaul networks of the service providers in addition to requiring changes in it to support the all-packet architecture [2].

There has been a lot of attention on cellular data offloading through WiFi networks [5, 10] and solutions are necessary considering the reported growth in mobile data consumption. Furthermore, the SmartTower according to the present invention increases cellular network consumption further, as it encourages usage of the network instead of the local resources of a device. The SmartTower may also reduce the strain on the backhaul network by:
- Smoothing the flow of data requests to the backhaul network by caching them at base stations for a short period of time.
- Caching popular content at SmartTower.
- Using SmartTower as a CDN aware of local and personal user trends and their context.

In contrast to offloading data to WiFi, the SmartTower according to the present invention does not reduce Radio Access Network (RAN) loads by using alternative channels, but rather uses
caching at base stations to reduce latencies and network load using the information about current radio link and backhaul conditions. Furthermore, bringing proxy servers closer to the mobile users by placing them inside the cellular network is good in terms of latency and security problem in the existing proxy service model [11]. Another optimization of the SmartTower is delaying transmissions both through the radio network and through the backhaul until the moments where the load is lower. Obviously, in order not to hurt performance more than required for QoS guarantees, such decisions would have to be made according to priorities of transmitted packets.

An implication of reduced average network latencies for users is reduced energy consumption of their devices. Battery life of current smartphones is infamously poor and being constantly connected to the Internet using radio contributed to that a lot. High network round-trip times (RTTs) to server also have significant impact on power consumption [8] and power consumption can differ in a few multiplicative factors, e.g. for 100KB of data and 10ms RTT energy consumption was measured to be around 100mJ while for the same data and 150ms RTT - 600mJ.

While caching as a standalone solution would improve user experience, it is also likely to be economically more expensive than direct data transfer [9]. However, it would be much more feasible as part of a more general system and therefore could benefit from the SmartTower.

Key objectives of 4G LTE networks include supporting higher data rates, reducing network latency and simplifying the network by utilizing an all-packet (Ethernet/IP) architecture. High proportion of a connection latency from a mobile terminal to a server comes from the backhaul network and the Internet, not radio channels, as shown by [15], therefore the reduction of RAN latency in 4G LTE to below 10ms RTT may remain insufficient for some applications when backbone latencies are added. Furthermore, the low RTT is only achievable under unloaded network conditions, therefore it is still important to decrease network load when possible.

Even though, for example, conversational voice requires latency to be below 150ms and user does not notice any delay at <30ms and it is obviously achievable in current cellular networks, machines are more sensitive to such latencies (e.g. real-time gaming needing multiple requests at a time or even more so - high frequency trading). Furthermore, as we explain below, code offloading benefits from each millisecond saved because most CPUs are capable of executing thousands of instructions every millisecond.

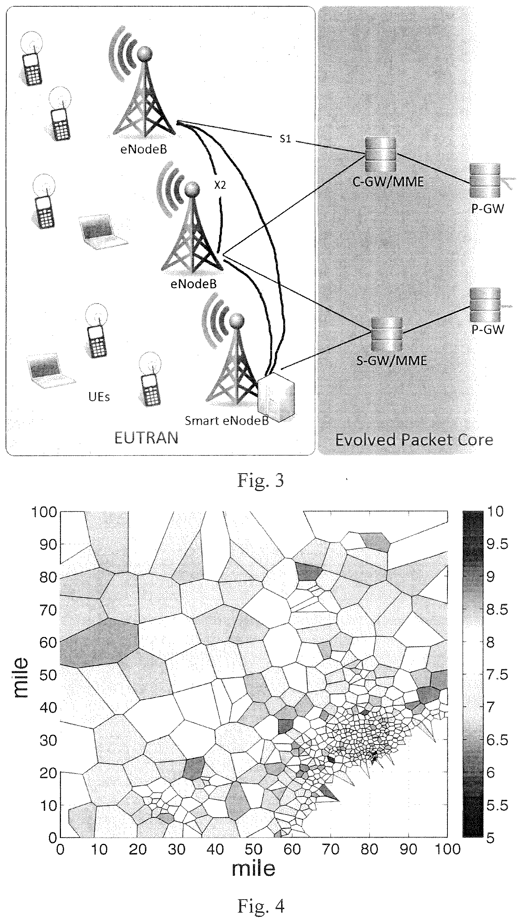

The architecture of computational resources added to 4G base stations (Fig. 3) according to the present invention allows more intelligence to be placed closer to the end-user. The motivation for making cell towers smarter than they currently are comes as a solution to multiple problems currently encountered by cellular networks as well as an opportunity to create new value-added services. The main use-cases of the SmartTower: providing code offloading support, reducing backhaul network strain and providing a platform for high-performance but economical mobile applications.

One of the further reasons for adding support to the architecture for the three rather different use cases (i.e. code offloading, reducing load and data caching) is economical and related to them supporting each other. Each use case has different trade-offs and benefits, but can use the same architecture, effectively reducing the cost of a single purpose. Furthermore, code offloading can obviously benefit from data caching and core network load can be reduced both by performing code offloading locally and caching data.

As mentioned before, the computational resources at cell towers essentially become extension of the already deployed cloud computing resources. Making developers aware of resources of such relatively low capacity (when compared to a data center) but also very low latency (LTE promises up to 10ms RTT of the RAN, hence latency of accessing a server should be of the same order) to a subset of users could help them adjust their applications in a similar way to what they already do with different servers of different computational power or technology (e.g. different instances, GPU-enabled servers on Amazon EC2). It is especially useful for interactive applications, games, etc. which have strict latency requirements for usability, but also do some of the processing that does not require such fast response.

If developers of streaming applications were exposed to such system, they could relatively easily modify their systemens to massively increase pre-caching of data. For example, services like music streaming service Spotify allow their users to listen to music using their mobile devices. However, to reduce their infrastructure costs they are using P2P network for music streaming to users connected via landline.

Mobile users, however, get data from the servers, which could be solved using the SmartTower: they could make the SmartTower aware of users' playlists, allowing for content pre-caching and de-duplication as well as balancing load of the backhaul network and P2P communications between the SmartTower instances and other landline-connected users. This is becoming increasingly important with the network loads from streaming services rising sharply: Cisco are estimating that two-thirds of the world's mobile data traffic will be video by 2015 [3].

### Brief description of the figures

The present invention will be explained in detail with the accompanied figures.
Fig. 1 shows the schematic structure of GSM EDGE and UMTS cellular network. It shows the main entities of the network and communications between them. It also shows where IP connectivity starts and therefore where Internet-related improvements could be used.
Fig. 2 shows the general structure of the SmartTower architecture according to the present invention and where the different components are located geographically. Furthermore, it describes relationship between the different SmartTower types of nodes in the sense of how they are similar and how gradual roll-out can be done: part of the nodes are made "smart" immediately and the rest rely on computational gateways as an alternative to serving gateways.
Fig. 3 shows 4G cellular network structure with only EUTRAN (Evolved UMTS Terrestrial Radio Access Network), according to the present invention. It also indicates how base stations are interconnected together and how they are connected to the EPC (Evolved Packet Core) and how it connects to external networks (e.g. the Internet)
Fig. 4, after [13], shows coverage of 3G base stations in terms of coverage and the total load of each cell, according to the present invention. It is representative of real base station coverage and reflects how radio resource planning is done in cellular networks.
Fig. 5 shows where the computational resources fit within the LTE network architecture as well as user and control plane data flows between network nodes, according to the present invention.

### Detailed description of the invention

In this section the architecture of the SmartTower system according to the present invention, including required modifications to the base stations and the network will be explained. The explanation starts with an overview of the general structure of a 4G network and focuses on the configuration with only EUTRAN Access Network. It then outlines the modifications in comparison with the general architecture.

### General 4G network structure according to the present invention

The general architecture of 4G cellular networks with only EUTRAN access network is shown in Fig. 3. UE, EUTRAN and EPC (Evolved Packet Core) together represent the Internet Protocol (IP) connectivity layer - all services are to be offered on top of IP.

EUTRAN is the air interface of 4G cellular networks. The development in EUTRAN is concentrated on one node, the evolved Node B (eNodeB) - all radio functionality is collapsed there with the eNodeB being the termination point for all radio related protocols. As a network, EUTRAN is simply a mesh of eNodeBs connecting to neighboring eNodeBs with the X2 interface.

Functionally eNodeB acts as a layer 2 bridge between UE and the EPC, by being the termination point of all the radio protocols towards the UE, and relaying data between the radio connection and the corresponding IP based connectivity towards the EPC. In this role, the eNodeB performs:
- Ciphering/deciphering data
- IP header compression/decompression
- Many Control Plane functions (e.g. Radio Resource Management, scheduling traffic
- Measurements for mobility and scheduling, selection of MME and UE attachment
- Routing user plane data towards Serving Gateway (S-GW)

MME in Fig. 3 is the Mobility Management Entity - the main control element in the Evolved Packed Core (EPC). Typically it is a server in a secure location in the operator's premises only operates in the Control Plane and is not involved in the path of User Plane data. We do not go into the details of functions of the MME, since the SmartTower works only in User Plane data.

The high level function of S-GW is User Plane tunnel management and switching - all user packets are transferred through the Serving Gateway. It also serves as the local mobility anchor for the data bearers when the UE moves between eNodeBs. S-GW is part of the network infrastructure maintained centrally in operation premises.

Packet Data Network Gateway (P-GW) is responsible for IP address allocation for the UE, QoS enforcement and flow-based charging according to rules from the PCRF. P-GW is the edge router between the EPS and external packet data networks.

Essentially, in User Plane, an IP packet for a UE is encapsulated in an EPC-specific protocol and tunnelled between the P-GW and the eNodeB for transmission to the UE. The GPRS Tunnelling Protocol (GTP) is used over the S1 interface is used for that matter.

### SmartTower structure according to the present invention

Having briefly discussed the general architecture of a 4G network, the present invention now discusses the architecture of the SmartTower. The solution according to the present invention comprises three main components having different trade-offs:
- A low-capacity server on eNodeB - serves requests of the base station clients only.
- Computing Gateway (C-GW) - special case of a serving gateway.
- Private cloud behind the EPC.

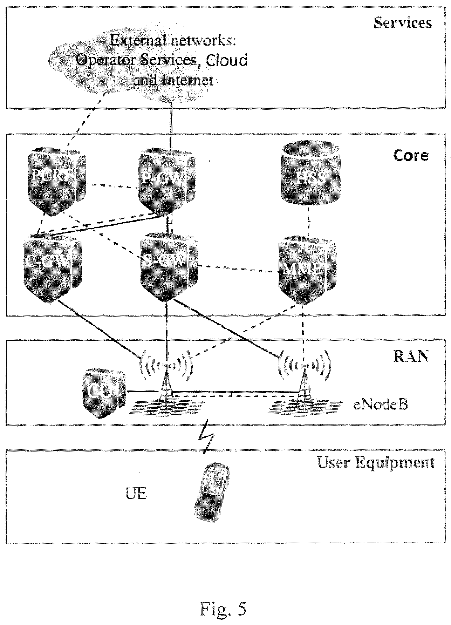

Below the present invention presents each of those approaches in more detail, by analyzing their performance and cost trade-offs in the evaluation section. Fig. 5 shows how the computational resources are integrated in LTE network, showing both user and control plane data connections.

***Server on eNodeB* -** smart eNodeB. The approach is to deploy a relatively low-capacity server on a base station, which would serve requests of the bases station clients only. This approach would allow achieving extremely low latencies, limited only by the radio communication (UE and eNodeB scheduling and processing) delays.

Recently there has been a lot of interest in improving mobile device performance and reducing their power consumption by using code offloading [7][8]. However, it has also been pointed out that WAN delays in the critical path of user interaction can hurt usability, therefore nearby resources (cloudlets) should rather be used to reduce latency [14]. Using computational resources located at cellular network base stations is more efficient due to the wider radio coverage, as more clients could be using the same infrastructure simultaneously.

Computation offloading in this case becomes relatively straightforward and simple to implement - applications using it would have to be aware of such resources, e.g. through a DNS lookup, reply to which would come from a DNS server located within telecom's network and hence aware of the architecture. Directing data to the server would then just be a matter of switching.

Implementing proxy service is, however, more difficult to do in order to avoid hurting performance, as the proxy needs to be transparent and therefore has to process a large flows of packets. In 4G networks the eNodeB has to ensure the necessary QoS for a bearer over the radio interface, hence each bearer has an associated QoS Class Identifier (QCI) and an Allocation and Retention Priority (ARP). A set of QCIs and their characteristics has been standardized (Table 1) and e.g. WWW, e-mail, p2p file sharing services have relatively low priority, allowing only a subset of packets to be processed based on their priority. The Minimum Guaranteed Bit Rate (GBR) bearers have dedicated transmission resources permanently allocated at bearer establishment or modification. The Non-GBR bearers do not guarantee any particular bit rate, i.e. no bandwidth resources are allocated permanently to the bearer.

**Table 1 - standardized QCIs for LTE**

| **QCI** | **Resource Type** | **Priority** | **Packet delay budget (ms)** | **Example Services** |
|---|---|---|---|---|
| 1 | GBR | 2 | 100 | Conversational voice |
| 2 | GBR | 4 | 150 | Conversational video (live streaming) |
| 3 | GBR | 5 | 300 | Non-conversational video (buffered streaming) |
| 4 | GBR | 3 | 50 | Real-time gaming |
| 5 | Non-GBR | 1 | 100 | IMS signaling |
| 6 | Non-GBR | 7 | 100 | Voice, video (live streaming), interactive gaming |
| 7 | Non-GBR | 6 | 300 | Video (buffered streaming) |
| 8 | Non-GBR | 8 | 300 | TCP-based (www, e-mail, chat), p2p |
| 9 | Non-GBR | 9 | 300 | |

The server at the base station is analyzing traffic with higher packet delay budget, namely QCI 3, 7, 8 and 9. However, for applications such as real-time or interactive gaming it is also worthwhile to serve clients close to them, when possible. Therefore, the server is also processing traffic with QCI 4 and 6, however with higher priority. All processing happens transparently to the users - a packet is processed locally whenever it is meant to; otherwise, it is passed along as in standard LTE configuration.

This approach may have a few caveats however. Firstly, roll-out of the service usually requires significant capital expenditure to deploy computational resources to each base station. Secondly, it might be necessary to adjust control plane protocols to enable billing for services provided by the service. And thirdly, because the servers on the base stations are relatively low capacity to save money and power, it might be necessary to deploy at least one of the two methods presented below for scalability of the service.

The modified eNodeB could be used to reduce the strain on the backhaul network, e.g. by:
- Smoothing the flow of data requests to the backhaul network by caching them at base stations for a short period of time.
- Caching popular content at SmartTower.
- Using SmartTower as a CDN aware of local and personal user trends and their context.

The SmartTower therefore does not reduce Radio Access Network (RAN) loads by using alternative channels. Instead, it buffers lower priority data with higher latency budget at the base station to decrease the peak load of the backhaul network. Large proportion of network capacity is consumed by applications that are delay tolerant - e-mail, data synchronization, social network signalling. Since computational resources at base stations are also aware of backhaul network load through control plane information, they also postpone transmission of such delay-tolerant data through the network until there is more capacity available.

***Computing Gateway*** is a special case of a serving gateway and because of the current architecture of 4G networks also relatively easy to implement: since each eNodeB can communicate with one or more S-GWs and S-GWs can also be pooled, required connections can also be set up through a C-GW and C-GWs can also be pooled. This can be done through the GPRS Tunnelling Protocol (GTP) user data tunnelling protocol (GTP-U), because GTP-U is a relatively simple IP based tunnelling protocol which permits many tunnels between each set of end points. When used in UMTS, each subscriber will have one or more tunnel, one for each PDP context they have active plus, possibly separate tunnels for specific connections with different quality of service requirements.

Advantages of this option include that the latency is still very low, only slightly increasing from the approach above because of extra scheduling and transmission delays, C-GWs can be deployed on operational premises, making it simpler and easier to manage and allows C-GWs to be pooled across multiple eNodeBs, reducing the initial capital expenditure. Furthermore, physical proximity allows C-GWs to be interconnected easily in a separate network, improving overall scalability.

Computing gateways are not involved in all data proxying, as only tunnels to specific routes are set up through such gateways. They are therefore mostly used as cloud computing and storage resources that are used by applications, however without the need for them to be aware of the internal structure of the network. Such applications are setting up connections to resources as if they were outside the network core, but instead are redirected to use the nearby ones for speed, efficiency and lower energy consumed by transmission.

Disadvantages of the approach, however, include the need for more powerful servers to be used as C-GWs due to the need to serve multiple eNodeBs, which obviously makes the price of a single C-GW higher than that of making an eNodeB smarter. Furthermore, making C-GWs act as transparent proxies is not feasible without forcing a lot of traffic through that is not meant for the node, therefore it could only act as a second level data cache. Some modifications to the control plane protocols are also necessary in order to set up connections through the gateways and support different QoS requirements according to their profiles, charging for the services.

***Private cloud*** is the part of infrastructure that further improves scalability of the SmartTower by providing resources to fall back to under a high load. It definitely has higher latencies than the two solutions above, as it is situated behind the mobile backhaul network and possibly as part of a separate infrastructure, however it is highly suitable for executing jobs that do not require extremely low latencies or where execution time is very long. It is to be noted that low latency is not necessary for everything, i.e. longer computational tasks are less sensitive to communication latency, as latency is negligible compared to execution time. Scalability therefore is more important and the private cloud backs the other parts of the system.

In the current architecture, this approach is also beneficial in high mobility cases, as we have not currently defined mobility management mechanisms for the above two approaches, which would lead to re-executions and reduced performance in high mobility cases. By positioning computational resources behind the EPC, however, the need to consider mobility is highly reduced.

Service providers might want to integrate the cloud computing services with the smart eNodeBs or C-GWs to improve their connectivity or to integrate charging mechanisms of the two systems more closely.

### Mobility

To avoid overcomplicating the architecture, the explanation of the present invention does not include mechanisms for handover of flows going through the servers based on the base stations. In that case, handovers are only smooth across multiple base stations if the user is being served by the C-GW that connects both base stations. C-GW therefore includes the same handover mechanisms as the standard S-GW. If a node is served outside the EPC, in the private cloud, however, mobility is dealt with by the EPC and not seen by the cloud.

The majority of users exhibit very low mobility. Roughly 60% of users are mostly stationary, i.e. constrained within a cell and over 95% of the users travel across less than 10 base stations in a day [13]. Furthermore, most of the data flows locally dealt with at eNodeB are not long-lived, further decreasing the probability that a handover will be required for a particular user at a given time.

### Performance

**Table 2 - 4G Network latency estimates**

| **Latency Estimates** | **Latency Element** |
|---|---|
| 6 | Uplink scheduling (request and grant) |
| 0.5 | Radio transmission time |
| 0.5 | Buffering time |
| 1.5 - 2.5 | User Plane Retransmissions 30% - 50% for 5ms HARQ RTT |
| 1 - 2 | UE processing delay (estimated) |
| 1 - 2 | eNodeB processing delay (estimated) |
| **4.5 - 8.5** | **Total RAN delay with pre-allocated resources** |
| **10.5 - 14.5** | **Total RAN delay with scheduling** |
| 1 - 2 | Transmission delays between eNodeB and S-GW/C-GW |
| 1 - 2 | C-GW processing delay |
| **6.5 - 10.5** | **Total C-GW delay with pre-allocated radio resources** |
| **12.5 - 18.5** | **Total C-GW delay with scheduling** |
| **50 - 70** | **Accessing private cloud directly from EPC** |
| **50 - 200** | **Accessing private cloud through the Internet (estimated)** |

The SmartTower according to the present invention focuses on improving code offloading performance by reducing communication latencies. Therefore we estimate latencies of the different approaches here in Table 2. Firstly, it is necessary to note that the User Plane latency estimate is higher than the 5ms required for LTE networks - some previous estimates have shown it to be as low as 3.5 ms [1], however it is only possible to achieve in an unloaded network, hence no scheduling or buffering delays due to other users and data streams. The estimates, however, includes multiple other assumptions:
- Scheduling delay depends on scheduling policy, which can be improved if there are pre-allocated resources (semi-persistent scheduling).
- Latency for S1 link is dominated by the propagation delay. According to the propagation speed in copper cables of 200000 km/s, a distance between two nodes of 200-400 km (large country) results in a latency of 1-2 ms.
- Processing delay is assumed to be the same for UE / eNodeB / C-GW / S-GW.
- There is User Plane retransmission 30%-50% for 5ms Hybrid Automatic Repeat Request (HARQ) RTT.
- With some load in the network there can be buffering time of around 0.5 ms.

The table clearly shows significantly lower communication latency between a mobile device and a server deployed on an eNodeB or C-GW than when the server is in a private cloud. Furthermore, accessing distant computational resources can have even higher latency than the estimated latency of accessing private cloud - it has been discussed in [14] and [8] have measured in their tests the RTT to be around 220ms. It is important not only in terms of performance, but also significantly affects power consumption [8], which is very important for today's mobile devices. Smart eNodeB does not seem to be significantly superior to C-GW based just on latency, however it has lower throughput requirements and data caching in case of high network load has more benefits when done in base stations.

Here the explanation of the present invention does not include the delay caused by a device changing into a power-saving state. It can add a lot to the overall latency, since the overall latency for change in state from LTE_IDLE to LTE_ACTIVE can be up to 100ms and transition from RRC CONNECTED (discontinuous reception mode to save UE battery power) can be around 10ms. Nevertheless, these latencies are part of the Control Plane and for low-latency communication with a base station it could be assumed that the device stays in LTE_ACTIVE state. If, however, the device is requesting long-lasting tasks to be offloaded to SmartTower, it will fall back to an energy-saving mode, but in this case latency will be less important due to the very large difference in the speed of computation.

### Conclusion

Due to current very limited roll-out of 4G networks, lack of access to the cellular network infrastructure and the fact that it is very hard to evaluate the full benefits of the architecture without large-scale deployment, the present invention only evaluates or discusses some aspects of the system, which are crucial and sufficient to demonstrate its feasibility: define the environment for which such system would be most beneficial, analyze user behaviour to justify it, estimate the required computational resources to sustain the demand and evaluate deployment costs in the given environment.

To make any large-scale system useful and economically viable, it has to first serve users - for telecommunications the economies of scale are especially important. Since user density is much higher in cities than rural areas, there is obviously more demand for services. Therefore, we also focus on an urban deployment scenario, which would be the best option to start rolling out the system.

Nevertheless, the layered architecture of the SmartTower allows the system to be rolled in stages and focus on areas with the highest demand, starting with building a private cloud (which multiple telecoms already have), then deploying C-GWs in operational premises to deal with aggregate loads from eNodeBs and putting servers on cell towers.

Furthermore, it has been measured recently, that around 10% of the base stations experience roughly about 50-60% of the aggregate traffic load [13]. Radio access network planning also represents the different loads in different areas - cells in urban areas can be a few orders of magnitude smaller than those in rural areas - this can be roughly illustrated using Voronoi diagrams, as they represent the coverage of a base station's radio coverage - a user is most likely to be associated with the base station that is closest to him geographically (Fig. 4). It has been shown, however, that correlation of proximate base station loads is relatively low, only increasing slightly when the loads are high, which one of the reasons for incorporating C-GWs in the design of the system, as it allows achieving better coverage of the network faster.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

### Related publications

[1] Latency improvements in 3G Long Term Evolution. Technical report, Ericsson, 2007.
[2] 4G impacts to mobile backhaul. Technical report, Fujitsu, 2009.
[3] Cisco visual networking index: Global mobile data traffic forecast update. Technical report, Cisco, February 2011.
[4] The momentum behind LTE worldwide. Technical report, Analysys Mason, 2011.
[5] A. Balasubramanian, R. Mahajan, and A. Venkataramani. Augmenting mobile 3G using WiFi. In MobiSys'10.
[6] R. Chakravorty, A. Clark, and I. Pratt. GPRSWeb: Optimizing the web for GPRS links. In In Proceedings of the ACM/USENIX MobiSys 2003, May 2003. ACM Press, 2003.
[7] B.-G. Chun, S. Ihm, P. Maniatis, M. Naik, and A. Patti. CloneCloud: elastic execution between mobile device and cloud. In EuroSys, pages 301 - 314, 2011.
[8] E. Cuervo, A. Balasubramanian, D.-k. Cho, A. Wolman, S. Saroiu, R. Chandra, and P. Bahl. MAUI: making smartphones last longer with code offload. In MobiSys '10.
[9] J. Erman, A. Gerber, M. Hajiaghayi, D. Pei, S. Sen, and O. Spatscheck. To cache or not to cache: The 3G case. Internet Computing, IEEE, 15(2):27 - 34, march-april 2011.
[10] B. Han, P. Hui, V. A. Kumar, M. V. Marathe, G. Pei, and A. Srinivasan. Cellular traffic offloading through opportunistic communications: a case study. In CHANTS '10.
[11] Z. Jiang, L. F. Chang, B. Jo, J. Kim, and K. K. Leung. Incorporating proxy services into wide area cellular IP networks. In IP networks, Wireless Communications and Mobile Computing, 2000.
[12] K. Johansson, A. Furuskar, P. Karlsson, and J. Zander. Relation between base station characteristics and cost structure in cellular systems. In Personal, Indoor and Mobile Radio Communications, 2004. 15th IEEE International Symposium on, volume 4, pages 2627 - 2631 Vol.4, sept. 2004.
[13] U. Paul, A. P. Subramanian, M. M. Buddhikot, and S. R. Das. Understanding traffic dynamics in cellular data networks. In INFOCOM, pages 882 - 890. IEEE, 2011.
[14] M. Satyanarayanan, P. Bahl, R. Caceres, and N. Davies. The case for VM-based cloudlets in mobile computing. Pervasive Computing, IEEE, 8(4):14 - 23, oct.-dec. 2009.
[15] W. L. Tan, F. Lam, and W. C. Lau. An empirical study on the capacity and performance of 3G networks. IEEE Transactions on Mobile Computing, 7:737 - 750, June 2008.
[16] J. Wang and Z. Du. A novel P2P mobile proxy caching scheme. In Mobile Technology, Applications and Systems, 2005 2nd International Conference on, pages 1 - 8, nov. 2005.

## Claims

1. Mobile communication system comprising an all-packet architecture, which comprises
i) a radio access network (RAN), wherein the radio access network (RAN) comprises:
a plurality of base stations (eNodeB),
a node (Smart eNodeB) connected with at least one of the base stations (eNodeB), wherein said node (Smart eNodeB) is adapted to buffering data between the base stations (eNodeB) and user equipments (UEs), wherein said node (Smart eNodeB) is used as a content delivery network, CDN, aware of local and personal user trends and their context, and said node (Smart eNodeB) is adapted to serve requests of the base stations (eNodeB) clients only; and
wherein the data comprises low priority application data with high latency budget, and/or real-time or an interactive application data;
said communication system further comprising:
ii) an evolved packet core network (EPC) connected with the radio access network (RAN), wherein the evolved packet core network (EPC) comprises a packet data network gateway (P-GW);
iii) a servicing gateway (S-GW) connected between the base stations (eNodeB) and the packet data network (P-GW) gateway, wherein the servicing gateway (S-GW) is adapted to provide first connections between the base stations (eNodeB) and the evolved packet core network (EPC); said servicing gateway (S-GW) further serves as a local mobility anchor for data bearers when the user equipment (UE) moves between the base stations (eNodeB),
iv) a computing gateway (C-GW) connected between the base stations (eNodeB) and the packet data network gateway (P-GW), wherein the computing gateway (C-GW) has a plurality of tunnels providing second connections between the base stations (eNodeB) and the evolved packet core network (EPC), and
v) a service network connected with the evolved packet core network (EPC),
wherein the system is configured to delay transmission both through the radio access network (RAN) and through the evolved packet core network (EPC) until moments with the load is lower according to the priority of the data.

2. System according to claim 1, wherein the service network comprises:
a private cloud connected with the evolved packet core network (EPC) through the plurality of the tunnels, wherein the private cloud is the part of infrastructure that further improves scalability of the system by providing resources to fall back to under a high load.

3. Method for providing mobile communication over an all-packet architecture with a mobile communication network having a radio access network (RAN), wherein the method comprises the steps of:
installing a plurality of base stations (eNodeB) in the radio access network (RAN);
providing a node (Smart eNodeB) within the radio access network (RAN) and connecting it with at least one of the base stations (eNodeB),
buffering data between the base stations (eNodeB) and user equipments (UEs) with the node (Smart eNodeB), wherein said node (Smart eNodeB) is used as a content delivery network, CDN, aware of local and personal user trends and their context, and said node (Smart eNodeB) is adapted to serve requests of the base stations (eNodeB) clients only; and
wherein the data comprises low priority application data with high latency budget, or real-time or an interactive application data, wherein the all-packet architecture further comprises
an evolved packet core network (EPC) connected with a radio access network (RAN), wherein the method further comprises the steps of:
installing a packet data network gateway (P-GW) in the evolved packet core network (EPC);
installing a servicing gateway (S-GW) within the evolved packet core network (EPC), and providing first connections between the base stations (eNodeB) and the evolved packet core network (EPC) through the servicing gateway, said servicing gateway (S-GW) further serves as a local mobility anchor for data bearers when the user equipment (UE) moves between the base stations (eNodeB);
installing a computing gateway (C-GW) within the evolved packet core network (EPC), creating a plurality of tunnels by the computing gateway (C-GW), and providing second connections between the base stations (eNodeB) and the evolved packet core network (EPC) through the plurality of tunnels.
a service network connected with the evolved packet core network (EPC), and
delaying transmission both through the radio access network (RAN) and through the evolved packet core network (EPC) until moments with the load is lower according to the priority of the data.

4. Method according to claim 3, wherein the method further comprises the steps of:
providing a private cloud within the service network and connecting the private cloud with the evolved packet core network (EPC) through the plurality of the tunnels, wherein the private cloud is the part of infrastructure that further improves scalability of the system by providing resources to fall back to under a high load.

## Patentansprüche

1. Mobilkommunikationssystem mit einer All-Packet-Architektur, welches aufweist:
i) ein Funkzugangsnetz (RAN), wobei das Funkzugangsnetz (RAN) aufweist:
mehrere Basisstationen (eNodeB),
einen Knoten (Smart eNodeB), der mit wenigstens einer der Basisstationen (eNodeB) verbunden ist, wobei der Knoten (Smart eNodeB) eingerichtet ist, Daten zwischen den Basisstationen (eNodeB) und Benutzergeräten (UE) zu puffern, wobei der Knoten (Smart eNodeB) als Content Delivery Network (CDN) verwendet wird, das auf lokale und persönliche Benutzertrends und ihren Zusammenhang anspricht, und wobei der Knoten (Smart eNodeB) eingerichtet ist, nur Anfragen der Basisstations(eNodeB)-Clients zu bedienen, und
wobei die Daten Anwendungsdaten niedriger Priorität mit einem hohen Latenzbudget und/oder Echtzeit- oder interaktive Anwendungsdaten umfassen,
wobei das Kommunikationssystem ferner aufweist:
ii) ein Evolved-Packet-Core(EPC)-Netz, das mit dem Funkzugangsnetz (RAN) verbunden ist, wobei das Evolved-Packet-Core(EPC)-Netz einen Paketdatennetz-Gateway (P-GW) aufweist,
iii) einen Servicing Gateway (S-GW), der zwischen die Basisstationen (eNodeB) und den Paketdatennetz(P-GW)-Gateway geschaltet ist, wobei der Servicing Gateway (S-GW) eingerichtet ist, erste Verbindungen zwischen den Basisstationen (eNodeB) und dem Evolved-Packet-Core(EPC)-Netz bereitzustellen, wobei der Servicing Gateway (S-GW) ferner als Local Mobility Anchor für Datenträger dient, wenn sich das Benutzergerät (UE) zwischen den Basisstationen (eNodeB) bewegt,
iv) einen Computing Gateway (C-GW), der zwischen die Basisstationen (eNodeB) und den Paketdatennetz-Gateway (P-GW) geschaltet ist, wobei der Computing Gateway (C-GW) mehrere Tunnel aufweist, welche zweite Verbindungen zwischen den Basisstationen (eNodeB) und dem Evolved-Packet-Core(EPC)-Netz bereitstellen, und
v) ein Dienstnetz, das mit dem Evolved-Packet-Core(EPC)-Netz verbunden ist,
wobei das System ausgelegt ist, Übertragungen sowohl durch das Funkzugangsnetz (RAN) als auch durch das Evolved-Packet-Core(EPC)-Netz entsprechend der Priorität der Daten bis zu Zeiträumen zu verzögern, während derer die Auslastung geringer ist.

2. System nach Anspruch 1, wobei das Dienstnetz aufweist:
eine private Cloud, die durch die mehreren Tunnel mit dem Evolved-Packet-Core(EPC)-Netz verbunden ist, wobei die private Cloud der Teil der Infrastruktur ist, der die Skalierbarkeit des Systems durch Bereitstellen von Ressourcen, auf die bei einer hohen Auslastung zurückgefallen werden kann, weiter verbessert.

3. Verfahren zum Bereitstellen einer mobilen Kommunikation über eine All-Packet-Architektur mit einem Mobilkommunikationsnetz, das ein Funkzugangsnetz (RAN) aufweist, wobei das Verfahren folgende Schritte aufweist:
Installieren mehrerer Basisstationen (eNodeB) im Funkzugangsnetz (RAN),
Bereitstellen eines Knotens (Smart eNodeB) innerhalb des Funkzugangsnetzes (RAN) und Verbinden von ihm mit wenigstens einer der Basisstationen (eNodeB),
Puffern von Daten zwischen den Basisstationen (eNodeB) und Benutzergeräten (UE) mit dem Knoten (Smart eNodeB), wobei der Knoten (Smart eNodeB) als Content Delivery Network (CDN) verwendet wird, das auf lokale und persönliche Benutzertrends und ihren Zusammenhang anspricht, und wobei der Knoten (Smart eNodeB) eingerichtet ist, nur Anfragen der Basisstations(eNodeB)-Clients zu bedienen, und
wobei die Daten Anwendungsdaten niedriger Priorität mit einem hohen Latenzbudget oder Echtzeit- oder interaktive Anwendungsdaten umfassen, wobei die All-Packet-Architektur ferner ein Evolved-Packet-Core(EPC)-Netz aufweist, das mit einem Funkzugangsnetz (RAN) verbunden ist, wobei das Verfahren ferner folgende Schritte aufweist:
Installieren eines Paketdatennetz-Gateways (P-GW) im Evolved-Packet-Core(EPC)-Netz,
Installieren eines Servicing Gateways (S-GW) innerhalb des Evolved-Packet-Core(EPC)-Netzes und Bereitstellen erster Verbindungen zwischen den Basisstationen (eNodeB) und dem Evolved-Packet-Core(EPC)-Netz durch den Servicing Gateway, wobei der Servicing Gateway (S-GW) ferner als Local Mobility Anchor für Datenträger dient, wenn sich das Benutzergerät (UE) zwischen den Basisstationen (eNodeB) bewegt,
Installieren eines Computing Gateways (C-GW) innerhalb des Evolved-Packet-Core(EPC)-Netzes, Erzeugen mehrerer Tunnel durch den Computing Gateway (C-GW) und Bereitstellen zweiter Verbindungen zwischen den Basisstationen (eNodeB) und dem Evolved-Packet-Core(EPC)-Netz durch die mehreren Tunnel,
ein Dienstnetz, das mit dem Evolved-Packet-Core(EPC)-Netz verbunden ist, und
Verzögern der Übertragung sowohl durch das Funkzugangsnetz (RAN) als auch durch das Evolved-Packet-Core(EPC)-Netz entsprechend der Priorität der Daten bis zu Zeiträumen, während derer die Auslastung geringer ist.

4. Verfahren nach Anspruch 3, wobei das Verfahren ferner folgende Schritte aufweist:
Bereitstellen einer privaten Cloud innerhalb des Dienstnetzes und Verbinden der privaten Cloud mit dem Evolved-Packet-Core(EPC)-Netz durch die mehreren Tunnel, wobei die private Cloud der Teil der Infrastruktur ist, der die Skalierbarkeit des Systems durch Bereitstellen von Ressourcen, auf die bei einer hohen Auslastung zurückgefallen werden kann, weiter verbessert.

## Revendications

1. Système de communication mobile comprenant une architecture tout-paquet, qui comprend :
i) un réseau d'accès radio (RAN), dans lequel le réseau d'accès radio (RAN) comprend :
une pluralité de stations de base (eNodeB),
un noeud (Smart eNodeB) connecté à au moins l'une des stations de base (eNodeB), dans lequel ledit noeud (Smart eNodeB) est adapté pour tamponner des données entre les stations de base (eNodeB) et des équipements utilisateurs (UE), dans lequel ledit noeud (Smart eNodeB) est utilisé comme réseau de fourniture de contenu CDN informé sur les tendances locales et personnelles des utilisateurs et leur contexte, et ledit noeud (Smart eNodeB) est adapté pour desservir les demandes des clients des stations de base (eNodeB) seulement ; et
dans lequel les données comprennent des données d'application de faible priorité avec un budget de latence élevée et/ou des données d'applications en temps réel ou interactives ;
ledit système de communication comprenant en outre :
ii) un réseau central de paquets évolués (EPC) connecté au réseau d'accès radio (RAN), dans lequel le réseau central de paquets évolués (EPC) comprend une passerelle de réseaux de données en paquets (P-GW) ;
iii) une passerelle d'entretien (S-GW) connecté entre les stations de base (eNodeB) et la passerelle de réseaux de données en paquets (P-GW), dans lequel la passerelle d'entretien (S-GW) est adaptée pour fournir des premières connexions entre les stations de base (eNodeB) et le réseau central de paquets évolués (EPC) ; ladite passerelle d'entretien (S-GW) sert en outre d'ancre de mobilité locale pour des porteuses de données lorsque l'équipement utilisateur (UE) se déplace entre les stations de base (eNodeB),
iv) une passerelle informatique (C-GW) connectée entre les stations de base (eNodeB) et la passerelle de réseau de données en paquets (P-GW), dans lequel la passerelle informatique (C-GW) a une pluralité de tunnels fournissant des secondes connexions entre les stations de base (eNodeB) et le réseau central de paquets évolués (EPC) et
v) un réseau de service connecté avec le réseau central de paquets évolués (EPC),
dans lequel le système est configuré pour retarder la transmission à la fois à travers le réseau d'accès radio (RAN) et à travers le réseau central de paquets évolués (EPC) jusqu'à des moments où la charge est plus faible selon la priorité des données.

2. Système selon la revendication 1, dans lequel le réseau de service comprend :
un nuage privé connecté au réseau central de paquets évolués (EPC) à travers la pluralité de tunnels, dans lequel le nuage privé est la partie d'infrastructure qui améliore en outre la capacité de mise à l'échelle du système en fournissant des ressources pour retomber en dessous d'une charge élevée.

3. Procédé de fourniture d'une communication mobile sur une architecture tout-paquet avec un réseau de communication mobile ayant un réseau d'accès radio (RAN), dans lequel le procédé comprend les étapes consistant à :
installer une pluralité de stations de base (eNodeB) dans le réseau d'accès radio (RAN) ;
fournir un noeud (Smart eNodeB) dans le réseau d'accès radio (RAN) et le connecter à au moins l'une des stations de base (eNodeB),
tamponner des données entre les stations de base (eNodeB) et les équipements utilisateurs (UE) avec le noeud (Smart eNodeB), dans lequel ledit noeud (Smart eNodeB) est utilisé comme réseau de fourniture de contenu CDN informé sur les tendances locales et personnelles des utilisateurs et leur contexte, et ledit noeud (Smart eNodeB) est adapté pour desservir les demandes des clients des stations de base (eNodeB) seulement ; et
dans lequel les données comprennent des données d'application de faible priorité avec un budget de latence élevée ou des données d'applications en temps réel ou interactives, dans lequel l'architecture tout-paquet comprend en outre :
un réseau central de paquets évolués (EPC) connecté au réseau d'accès radio (RAN), dans lequel le procédé comprend en outre les étapes consistant à :
installer dans le réseau central de paquets évolués (EPC) une passerelle de réseau de données en paquets (P-GW) ;
installer une passerelle d'entretien (S-GW) dans le réseau central de paquets évolués (EPC) et fournir des premières connexions entre les stations de base (eNodeB) et le réseau central de paquets évolués (EPC) à travers la passerelle d'entretien, ladite passerelle d'entretien (S-GW) sert en outre d'ancre de mobilité locale pour des porteuses de données lorsque l'équipement utilisateur (UE) se déplace entre les stations de base (eNodeB),
installer une passerelle informatique (C-GW) dans le réseau central de paquets évolués (EPC), créer une pluralité de tunnels par la passerelle informatique (C-GW) et fournir des secondes connexions entre les stations de base (eNodeB) et le réseau central de paquets évolués (EPC) à travers la pluralité de tunnels,
un réseau de service connecté avec le réseau central de paquets évolués (EPC), et
retarder la transmission à la fois à travers le réseau d'accès radio (RAN) et à travers le réseau central de paquets évolués (EPC) jusqu'à des moments où la charge est plus faible selon la priorité des données.

4. Procédé selon la revendication 3, dans lequel le procédé comprend en outre les étapes consistant à :
fournir un nuage privé dans le réseau de service et connecter le nuage privé avec le réseau central de paquets évolués (EPC) à travers la pluralité des tunnels, dans lequel le nuage privé est la partie d'infrastructure qui améliore en outre la capacité de mise à l'échelle du système en fournissant des ressources pour retomber en dessous d'une charge élevée.
